# EUROPÄISCHE PATENTSCHRIFT

(11) **EP 3 667 270 B1**
(45) Veröffentlichungstag und Bekanntmachung des Hinweises auf die Patenterteilung: **28.01.2026**
(21) Anmeldenummer: 19214050.7
(22) Anmeldetag: 06.12.2019
(51) Int. Cl.: G01J 1/02, G01J 1/04, G01J 1/42, F21V 23/04, F21Y 115/10, F21V 3/02

(54) **LICHTREGELUNG DURCH LEUCHTENABDECKUNG**
LIGHT CONTROL BY LIGHT COVERAGE
RÉGULATION DE LA LUMIÈRE AU MOYEN DU COUVERCLE DE LUMINAIRE

(30) Priorität: 06.12.2018 DE 102018009603; 28.02.2019 DE 102019105164
(43) Veröffentlichungstag der Anmeldung: 17.06.2020
(73) Patentinhaber: Siteco GmbH, 83301 Traunreut (DE)
(72) Erfinder: Bornemann, Lars, 83254 Breitbrunn (DE); König, Christian, 84558 Kirchweidach (DE)
(74) Vertreter: Schmidt, Steffen

(56) Entgegenhaltungen:
- WO-A2-2009/034515
- DE-U1- 202015 104 310
- US-A1- 2014 268 790

## Beschreibung

Die vorliegende Erfindung betrifft eine Leuchte, welche Kunstlicht in Ergänzung zu Tageslicht erzeugen soll und insbesondere eine Leuchte mit einem integrierten Lichtsensor.

Im Stand der Technik ist es üblich, insbesondere im Zusammenhang mit Beleuchtungsanlagen in Gebäuden, Lichtsensoren einzusetzen, die zur Steuerung der Beleuchtungsanlage dienen. Die Leuchten können mit Lichtsensoren ausgestattet sein, deren Daten dazu verwendet werden, den Anteil des Kunstlichts nur in Ergänzung zu dem vorhandenen Tageslicht zu Steuern.

Die Lichtsensoren sind entweder separat von der Leuchte angeordnet oder an der Leuchte im Gehäuse integriert, um das Umgebungslicht der Leuchte zu messen. Der Lichtsensor muss jedoch geschützt angeordnet werden, insbesondere von Umweltbedingungen wie Staub und Feuchtigkeit abgeschirmt werden. Dazu ist es erforderlich, ein eigenes Gehäuse für den Lichtsensor, oder wenigstens ein eigenes Fenster im Gehäuse der Leuchte vorzusehen.

Ein weiterer Nachteil der Lichtsensoren für Leuchten im Stand der Technik ist es, dass in der Regel nur das Umgebungslicht gemessen wird. Das von der Leuchte selbst erzeugte Licht wird entweder nur indirekt über die Leistungsabgabe der Leuchte bestimmt oder durch einen separaten Lichtsensor erfasst.

US 2014/268790 A1 offenbart eine Leuchte gemäß dem Oberbegriff des Anspruchs 1. Ferner sind in WO 2009/034515 A2 und DE 20 2015 104 310 U1 Leuchten beschrieben, welche einen integrierten Lichtsensor aufweisen.

Aufgabe der vorliegenden Erfindung ist es, eine Leuchte bereitzustellen, die eine automatische Umgebungslichtabhängige Steuerung der Leuchte ermöglicht und dabei einfach aufgebaut ist.

Gelöst wird die Aufgabe durch eine Leuchte nach Anspruch 1.

Eine Besonderheit der Leuchte nach der vorliegenden Erfindung besteht darin, dass ein Lichtsensor im Gehäuse unter der gleichen Abdeckung wie die Lichtquelle angebracht ist und zwar in einer Position, in welcher der Lichtsensor sowohl Licht der Lichtquelle als auch Umgebungslicht, welches durch die Leuchtenabdeckung in die Leuchte eintritt, empfängt. Dadurch ist es möglich, mit dem gleichen Lichtsensor sowohl das Umgebungslicht als auch das von der Leuchte selbst erzeugte Licht zu messen. Ferner ist der Aufbau besonders einfach, weil der Lichtsensor durch die gleiche Leuchtenabdeckung geschützt ist, die ohnehin zum Schutz der Lichtquelle an der Leuchte vorgesehen sein muss.

Erfindungsgemäß ist der Lichtsensor elektronisch dazu eingerichtet, zwischen dem Licht der Lichtquelle und Fremdlicht, welches durch die Leuchtenabdeckung in die Leuchte eintritt, zu unterscheiden. Erfindungsgemäß weist der Lichtsensor speziell für die Wellenlänge der Lichtquelle eine andere Empfindlichkeit auf, als für das Umgebungslicht, welches außerhalb der Wellenlänge der Lichtquelle liegt. Diese Konfiguration eignet sich z.B., wenn für die Lichtquelle eine Halbleiterlichtquelle vorgesehen ist, die ohnehin nur Licht mit bestimmten diskreten Wellenlängen abgibt.

Gemäß einer bevorzugten Ausführungsform ist der Lichtsensor durch eine optische Komponente an die Leuchtenabdeckung angekoppelt, um den Anteil des Lichts, welches von der Lichtquelle auf den Sensor trifft, zu verringern. Alternativ oder zusätzlich zu der elektronischen Unterscheidung zwischen Licht der Lichtquelle und Fremdlicht kann die optischen Komponente den Anteil des von der Lichtquelle selbst erzeugten Lichts, das auf den Lichtsensor auftrifft, verringern. Beispielsweise kann durch die Art einer Lichtleitung das Licht von der Leuchtenabdeckung zum Lichtsensor geleitet werden. Alternativ oder zusätzlich kann auch eine Abschirmung zwischen dem Lichtsensor und der Lichtquelle vorhanden sein, um den Anteil des Lichts, welcher direkt von der Lichtquelle auf den Lichtsensor trifft, zu reduzieren. Diese Ausführungsformen lassen sich baulich sehr einfach realisieren und benötigen keine komplexe Elektronik, um zwischen dem Kunstlicht der Lichtquelle und dem Fremdlicht aus der Umgebung zu unterscheiden.

Gemäß einer bevorzugten Ausführungsform ist die optische Komponente eine Röhre, die sich wenigstens zum Teil zwischen der Leuchtenabdeckung und dem Lichtsensor erstreckt. Die Röhre kann z.B. den Lichtsensor im Bereich zwischen einer Platine, auf welcher der Lichtsensor und die Lichtquelle angebracht sind, und der Leuchtenabdeckung abschirmen. Die Röhre kann auch als Lichtleiter ausgeführt sein, um Licht von der Abdeckung zum Lichtsensor zu leiten. Dadurch lässt sich der Anteil des gemessenen Kunstlichts der Lichtquelle, welcher von dem Lichtsensor erfasst wird, gegenüber dem Anteil des Fremdlichts, welcher von außen durch die Leuchtenabdeckung eintritt und auf den Lichtsensor trifft, reduzieren. Vorzugsweise ist der gemessene Anteil des von der Lichtquelle selbst erzeugten Lichts jedoch nicht komplett abgeschirmt, so dass die vom Lichtsensor erfassten Werte auch einen Rückschluss auf die Menge des von der Lichtquelle erzeugten Lichts erlauben. Beispielsweise können die Daten des Lichtsensors in Ausführungsformen der Erfindung dafür verwendet werden, um ein gewünschtes Beleuchtungsniveau zu erhalten. Für diese Anwendung ist erforderlich, dass der Lichtsensor sowohl Licht der Lichtquelle als auch Fremdlicht erfassen kann.

Gemäß einer bevorzugten Ausführungsform ist die optische Komponente ein Lichtleiter, welcher sich, wenigstens zum Teil, zwischen der Leuchtenabdeckung und der Lichtsensor erstreckt. Der Lichtleiter kann insbesondere direkt an der Innenseite der Leuchtenabdeckung angrenzen, um den Anteil des durch die Abdeckung hindurchtretenden Fremdlichts, welches auf den Lichtsensor auftrifft, zu erhöhen.

Gemäß einer bevorzugten Ausführungsform ist die optische Komponente integral mit der Leuchtenabdeckung ausgebildet. Die optische Komponente kann z.B. als Lichtleiter aus demselben transparenten Material wie die Leuchtenabdeckung gebildet sein und mit dieser in einem Stück hergestellt werden. Da die transparente Abdeckung einen Brechungsindex größer als 1 besitzt, ist das Material in der Regel auch geeignet, um einen Lichtleiter zu bilden. Zusätzlich kann auch ein reflektierendes Material vorgesehen sein, welches im Bereich zwischen der Innenseite der Leuchtenabdeckung und dem Lichtsensor um den Lichtleiter angeordnet ist. Auch dieses reflektierende Material kann integral mit der Leuchtenabdeckung verbunden sein.

Gemäß einer bevorzugten Ausführungsform grenzt die optische Komponente an die Innenseite der Leuchtenabdeckung an. Wenn die optische Komponente direkt an der Innenseite der Leuchtenabdeckung angrenzt, ist der Anteil des Fremdlichts, welches durch die Abdeckung hindurchtritt und auf den Lichtsensor auftrifft, besonders stark erhöht. Ferner lässt sich diese Ausführungsform besonders einfach in der vorhergehend beschriebenen Ausführungsform herstellen, weil die optische Komponente an der Innenseite der Leuchtenabdeckung einstückig aus dem gleichen transparenten Material, z.B. aus einem tiefgezogenen Kunststoff hergestellt sein kann.

Gemäß einer bevorzugten Ausführungsform weist die Abdeckung eine Strukturierung zur Lichtbrechung, insbesondere Linsen oder Prismenstrukturen, auf und die Strukturierung erstreckt sich durchgängig über die Lichtquelle und den Lichtsensor. Auf diese Weise kann ein Teil des Lichts, welches von der Lichtquelle auf die Innenseite der Leuchtenabdeckung auftrifft, wieder in Richtung zum Lichtsensor umgelenkt werden. Diese Ausführungsform eignet sich daher z.B. für Anwendungen, bei denen der Lichtsensor einen höheren Anteil des von der Lichtquelle erzeugten Kunstlichts messen soll.

Weitere Merkmale und Vorteile der vorliegenden Erfindung werden aus der nachfolgenden Beschreibung bevorzugter Ausführungsformen, die in Verbindung mit den Figuren gegeben werden, deutlich. In den Figuren ist Folgendes dargestellt:
- Figur 1: zeigt schematisch einen Querschnitt durch eine erste Ausführungsform einer Leuchte.
- Figur 2: zweigt schematisch einen Querschnitt durch eine zweite Ausführungsform einer Leuchte.
- Figur 3: zeigt schematisch einen Querschnitt durch eine dritte Ausführungsform einer Leuchte.

Alle dargestellten Ausführungsformen weisen ein Leuchtengehäuse 2 auf, welches mit einer transparenten Abdeckung 4 auf einer Seite verschlossen ist. Die Leuchten können beispielsweise als Innenraumleuchten ausgebildet sein. Es ist auch möglich, dass die Gehäuse mit der Abdeckung dicht verschlossen sind, um eine Leuchter höherer Schutzklasse zu bilden. Für einfache Anwendungen kann die Leuchtenabdeckung 4 auf das Gehäuse 2 auch ohne besondere Dichtung aufgesetzt sein.

Die Abdeckung 4 ist transparent ausgestaltet, so dass Licht der Leuchte aus dem Gehäuseinneren über die Leuchtenabdeckung nach außen abgegeben werden kann. Dazu ist in dem Leuchtengehäuse 2 eine Platine 6 angeordnet, auf der sich wenigstens eine Lichtquelle, insbesondere ein Halbleiterlichtquelle, die allgemein als LED 8 bezeichnet wird, angeordnet. Neben der Lichtquelle 8 befindet sich auf der gleichen Platine 6 noch ein Lichtsensor 10, welcher beispielsweise als Fotodiode ausgebildet ist.

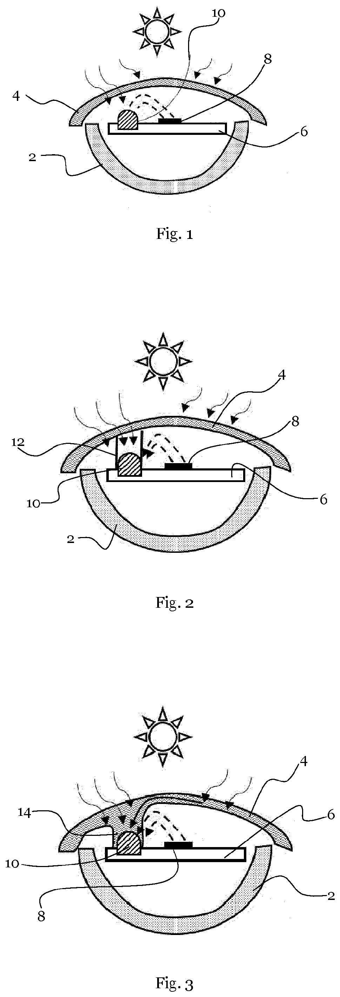

In der Figur 1 ist dargestellt, dass Licht der LED 8 direkt auf den Lichtsensor 10 auftreffen kann. Ferner kann Umgebungslicht durch die transparente Abdeckung 4 auch in die Leuchte eindringen. Ein Teil des Umgebungslichts trifft ebenfalls auf den Lichtsensor 10 auf. Dadurch misst der Lichtsensor 10 eine Kombination aus künstlichem Licht der Lichtquelle 8 aus der eigenen Leuchte und des Umgebungslichts. Zur Ermittlung des Anteils des Fremdlichts kann eine elektronische Steuerung vorgesehen sein, durch die die Lichtkomponenten brechend werden. Beispielsweise kann vorgesehen sein, dass die LED 8 moduliert wird, insbesondere in einer Frequenz, die für den Betrachter nicht sichtbar ist, und der Lichtsensor 10 ermittelt den Anteil des Lichts, welcher der Modulation unterliegt. Dadurch lässt sich rechnerisch der Anteil des Fremdlichts ermitteln.

Die Figuren 2 und 3 zeigen alternative Ausführungsformen, in welchen ein optisches Element zwischen der Abdeckung 4 und dem Lichtsensor 10 angeordnet ist, um den Anteil des auf den Lichtsensor auftreffenden Fremdlichts im Verhältnis zu dem künstlichen Licht von der Lichtquelle 8 zu erhöhen.

Gemäß der Ausführungsform nach Figur 2 ist eine Röhre 12 zwischen der Abdeckung 4 und dem Lichtsensor 10 angeordnet. Die Röhre 12 kann aus einem wenigstens teilweise lichtundurchlässigen Material gebildet sein, um wenigstens einen Teil des von der LED 8 ausgehenden Lichts, das auf den Lichtsensor auftreffen wird, abzuschirmen. Auf diese Weise misst der Lichtsensor überwiegend nur das Fremdlicht.

Gemäß der Ausführungsform nach Figur 3 ist anstelle der Röhre 12 ein Lichtleiter 14 als optisches Element zwischen der Abdeckung 4 und dem Lichtsensor 10 vorgesehen. In der dargestellten Ausführungsform ist der Lichtleiter 14 als kontinuierliche Erweiterung des transparenten Materials der Abdeckung 4 integral mit dieser ausgebildet und erstreckt sich bis zur Oberfläche des Lichtsensors 10. Durch die Lichtleitung innerhalb der Abdeckung 4 bzw. dem Lichtleiter 14 wird ein erhöhter Anteil von Fremdlicht, welches von außen auf die Abdeckung 4 auftrifft, zum Lichtsensor 10 geleitet. Ein Teil des von der LED 8 ausgehenden Lichts kann seitlich auch in den Lichtleiter eindringen. Insgesamt ist jedoch der Anteil des Fremdlichts gegenüber dem Kunstlicht der LED, welches von dem Lichtsensor 10 empfangen wird, gegenüber der Ausführungsform nach Figur 1 erhöht. Ferner kann in der Ausführungsform nach Figur 3 auch eine wenigstens teilweise reflektierende Beschichtung des Lichtleiters vorgesehen sein. Auf diese Weise kann der Anteil des von der LED 8 auf den Lichtsensor 10 auftreffenden Lichts noch weiter reduziert werden.

In Ergänzung zu der Lichtleitung, wie in Figur 3 dargestellt, können ferner auch lichtbrechende Elemente auf einer Oberfläche der Abdeckung 4 vorgesehen sein, welche die Lichtleitung in Richtung zu dem Lichtsensor 10 erhöhen. Ferner können die Elemente auch so eingerichtet sein, dass wiederum der Anteil des von der LED 8 auf den Lichtsensor 10 auftreffenden Lichts erhöht wird.

Durch den in der Leuchte integrierten Lichtsensor 10 kann auf externe Lichtsensorik verzichtet werden. Dies reduziert die Komplexität der Gesamtinstallation einer Beleuchtungsanlage, welche mit Lichtsensoren geregelt wird. Dabei ist auch berücksichtigt, dass die Daten des integrierten Lichtsensors 10 über eine Schnittstelle der Leuchte durch eine drahtgebundene oder drahtlose Kommunikation weitergegeben werden, so dass auch weitere Leuchten einer vernetzten Beleuchtungsanlage mit den Sensordaten der Leuchte nach einer der vorhergehend beschriebenen Ausführungsformen gesteuert werden kann.

Die integrierte Installation des Lichtsensors hat verschiedene Vorteile, die sich nicht nur auf die Möglichkeit beziehen, den Anteil des gemessenen Fremd- und Kunstlichts der Eigenleuchte auszuwählen. Die integrierte Anordnung des Lichtsensors erspart den Aufwand für zusätzliche Gehäuse oder transparente Abdeckungen des Lichtsensors. Ferner ist der Lichtsensor nicht nur vor Umwelteinflüssen geschützt in der Leuchte angeordnet. Ebenso können auch mechanische Störungen, **z.B.** für eine ballwurfsichere Leuchte, die in Sportstätten üblich ist, realisiert werden, ohne den Sensor separat von den Leuchtmitteln schützen zu müssen. In der Regel bietet das Gehäuse einer Leuchte ohnehin genügend Platz, um Lichtsensoren anzuordnen. Der konstruktive Aufwand für eine Leuchte gemäß der vorliegenden Erfindung ist daher vergleichsweise gering.

### BEZUGSZEICHENLISTE

- 2: Gehäuse
- 4: Leuchtenabdeckung
- 6: Platine
- 8: LED
- 10: Lichtsensor
- 12: Röhre
- 14: Lichtleiter

## Patentansprüche

1. Leuchte, umfassend:
ein Gehäuse (2),
eine wenigstens teilweise transparente Leuchtenabdeckung (4), welche das Gehäuse (2) abdeckt und als Lichtaustrittsfläche der Leuchte dient,
wenigstens eine Lichtquelle (8), die unter der Leuchtenabdeckung (4) auf der dem Gehäuse (2) zugewandten Seite angeordnet ist, und
einen Lichtsensor (10), der benachbart zur Lichtquelle (8) unter der Leuchtenabdeckung (4) auf der dem Gehäuse (2) zugewandten Seite in einer Position angeordnet ist, so dass der Lichtsensor (10) sowohl Licht der Lichtquelle (8) als auch Umgebungslicht, welches durch die Leuchtenabdeckung in die Leuchte eintritt, empfängt, wobei der Lichtsensor (10) elektronisch dazu eingerichtet ist, zwischen dem Licht der Lichtquelle (8) und Fremdlicht, welches durch die Leuchtenabdeckung (4) in die Leuchte eintritt, zu unterscheiden, **dadurch gekennzeichnet, dass**
der Lichtsensor (10) speziell für eine Wellenlänge der Lichtquelle eine andere Empfindlichkeit aufweist, als für das Umgebungslicht, welches außerhalb der Wellenlänge der Lichtquelle liegt, wobei die Lichtquelle eine Halbleiterlichtquelle ist, die nur Licht mit bestimmten diskreten Wellenlängen abgibt.

2. Leuchte nach einem der vorhergehenden Ansprüche, wobei der Lichtsensor (10) durch eine optische Komponente (12; 14) an die Leuchtenabdeckung angekoppelt ist, so dass der Anteil des Lichts, welches von der Lichtquelle auf den Sensor trifft, verringert ist, ohne auf Null reduziert zu sein.

3. Leuchte nach Anspruch 2, wobei die optische Komponente eine Röhre (12) ist, die sich wenigstens zum Teil zwischen der Leuchtenabdeckung (4) und dem Lichtsensor (10) erstreckt.

4. Leuchte nach Anspruch 2 oder 3, wobei die optische Komponente ein Lichtleiter (14) ist, welcher sich, wenigstens zum Teil, zwischen der Leuchtenabdeckung (4) und dem Lichtsensor (10) erstreckt.

5. Leuchte nach einem der Ansprüche 2 bis 4, wobei die optische Komponente (12; 14) integral mit der Leuchtenabdeckung ausgebildet ist.

6. Leuchte nach einem der Ansprüche 3 bis 6, wobei die optische Komponente (12; 14) an die Innenseite der Leuchtenabdeckung (4) angrenzt.

7. Leuchte nach einem der vorhergehenden Ansprüche, wobei die Leuchtenabdeckung (4) eine Strukturierung zur Lichtbrechung, insbesondere Linsen- oder Prismenstrukturen, aufweist und die Strukturierung sich durchgängig über die Lichtquelle (8) und den Lichtsensor (10) erstreckt.

## Claims

1. A luminaire, comprising:
a housing (2),
an at least partially transparent luminaire cover (4) covering the housing (2) and serving as a light exit surface of the luminaire,
at least one light source (8) arranged below the luminaire cover (4) on the side facing the housing (2), and
a light sensor (10) arranged adjacent to the light source (8) below the luminaire cover (4) on the side facing the housing (2) in a position such that the light sensor (10) receives both light of the light source (8) and ambient light entering the luminaire through the luminaire cover, wherein
the light sensor (10) is electronically configured to distinguish between the light of the light source (8) and extraneous light entering the luminaire through the luminaire cover (4), **characterized in that**
the light sensor (10) has a different sensitivity specifically for a wavelength of the light source than for the ambient light which is outside the wavelength of the light source, wherein the light source is a semiconductor light source which only emits light with certain discrete wavelengths.

2. Luminaire according to one of the preceding claims, wherein the light sensor (10) is coupled to the luminaire cover by an optical component (12; 14) such that the proportion of the light impinging on the sensor from the light source is reduced without being reduced to zero.

3. Luminaire according to claim 2, wherein the optical component is a tube (12) extending at least partly between the luminaire cover (4) and the light sensor (10).

4. Luminaire according to claim 2 or 3, wherein the optical component is a light guide (14) extending at least partly between the luminaire cover (4) and the light sensor (10).

5. Luminaire according to any one of claims 2 to 4, wherein the optical component (12; 14) is formed integrally with the luminaire cover.

6. Luminaire according to any one of claims 3 to 6, wherein the optical component (12; 14) adjoins the inner side of the luminaire cover (4).

7. Luminaire according to any one of the preceding claims, wherein the luminaire cover (4) has a structuring for light refraction, in particular lens or prism structures, and the structuring extends continuously over the light source (8) and the light sensor (10).

## Revendications

1. Luminaire, comprenant :
un boîtier (2),
un couvercle de luminaire au moins partiellement transparent (4) recouvrant le boîtier (2) et servant de surface de sortie de lumière du luminaire,
au moins une source de lumière (8) disposée sous le couvercle de luminaire (4) du côté faisant face au boîtier (2), et
un capteur de lumière (10) disposé à un emplacement adjacent à la source de lumière (8) sous le couvercle de luminaire (4) du côté faisant face au boîtier (2) de manière telle que le capteur de lumière (10) reçoit à la fois la lumière de la source de lumière (8) et la lumière ambiante entrant dans le luminaire à travers le couvercle de luminaire, dans lequel
le capteur de lumière (10) est configuré électroniquement pour faire la distinction entre la lumière de la source de lumière (8) et la lumière parasite entrant dans le luminaire à travers le couvercle de luminaire (4), **caractérisé en ce que**
le capteur de lumière (10) présente spécifiquement une autre sensibilité pour une longueur d'onde de la source de lumière que pour la lumière ambiante qui est en dehors de la longueur d'onde de la source de lumière, dans lequel la source de lumière est une source de lumière à semiconducteur qui émet uniquement de la lumière ayant certaines longueurs d'onde discrètes.

2. Luminaire selon l'une quelconque des revendications précédentes, dans lequel le capteur de lumière (10) est relié au couvercle de luminaire par un composant optique (12 ; 14) de manière telle que la partie de la lumière incidente sur le capteur provenant de la source de lumière est réduite sans être réduite à zéro.

3. Luminaire selon la revendication 2, dans lequel le composant optique est un tube (12) s'étendant au moins en partie entre le couvercle de luminaire (4) et le capteur de lumière (10).

4. Luminaire selon la revendication 2 ou 3, dans lequel le composant optique est un guide de lumière (14) s'étendant au moins en partie entre le couvercle de luminaire (4) et le capteur de lumière (10).

5. Luminaire selon l'une quelconque des revendications 2 à 4, dans lequel le composant optique (12 ; 14) est formé d'un seul tenant avec le couvercle de luminaire.

6. Luminaire selon l'une quelconque des revendications 3 à 6, dans lequel le composant optique (12 ; 14) est adjacent au côté intérieur du couvercle de luminaire (4).

7. Luminaire selon l'une quelconque des revendications précédentes, dans lequel le couvercle de luminaire (4) présente une structuration pour réfracter la lumière, en particulier des structures lenticulaires ou prismatiques, et dans lequel la structuration s'étend sans interruption au-dessus de la source de lumière (8) et du capteur de lumière (10).
